# EUROPEAN PATENT APPLICATION

(11) **EP 4 534 315 A1**
(43) Date of publication of application: **09.04.2025**
(21) Application number: 24204182.0
(22) Date of filing: 02.10.2024
(51) Int. Cl.: B60K 15/03, B60K 15/04

(54) **FUEL TANK FOR VEHICLES**

(30) Priority: 04.10.2023 IT 202300020535
(71) Applicant: FERRARI S.p.A., 41100 Modena (IT)
(72) Inventor: ORLANDINI, Luca, 41100 MODENA (IT); AMICI, Marco, 41100 MODENA (IT); BERGAMINI, Stefano, 41100 MODENA (IT)
(74) Representative: Studio Torta S.p.A.

(57) **Abstract**

A fuel tank for vehicles is provided with a container (2) for storing fuel having an opening (3) limited by an inner coupling flange (6), with a closing plate (9) for the container (2) limited by an outer coupling flange (10) configured to be coupled to the inner coupling flange (6) in a fluid-tight manner through the interposition of a first ring gasket (14), and with a second ring gasket (19) to couple the opening (3), the closing plate (9), and a locking ring (15) of the closing plate (9) on the container (2) to one another in a fluid-tight manner.

## Description

### CROSS-REFERENCE TO RELATED APPLICATIONS

This patent application claims priority from Italian patent application no. 102023000020535 filed on October 4, 2023, the entire disclosure of which is incorporated herein by reference.

### TECHNICAL FIELD

The present invention relates to a fuel tank for vehicles.

In particular, the present invention relates to a fuel tank for vehicles of the type comprising a container for storing fuel; a supply pump mounted inside the container; and a closing plate for the container.

### BACKGROUND

The container has an opening provided with an inner coupling flange configured to be coupled in a fluid-tight manner, through the interposition of a ring gasket, to an outer coupling flange obtained on the closing plate.

The tank further comprises a locking ring for axially locking the closing plate on the inner coupling flange of the container with the interposition of the mentioned ring gasket.

The known fuel tanks for vehicles of the type described above have some drawbacks mainly deriving from the fact that the mentioned ring gasket is unable to limit the leakage between the locking ring and the inner and outer coupling flanges of the vapours generated by the fuel inside the container.

### SUMMARY

The object of the present invention is to provide a fuel tank for vehicles which is exempt from the drawbacks set forth above and which is simple and cost-effective to manufacture.

According to the present invention, a fuel tank for vehicles is provided as claimed in the appended claims.

### BRIEF DESCRIPTION OF THE DRAWINGS

The present invention will now be described with reference to the accompanying drawings, which illustrate a non-limiting example embodiment thereof, wherein:
Figure 1 is a schematic perspective view, with parts removed for clarity, of a preferred embodiment of the fuel tank of the present invention;
Figure 2 is an exploded schematic perspective view, with parts removed for clarity, of a detail of the fuel tank of Figure 1; and
Figure 3 is a schematic longitudinal section, with parts removed for clarity, of the detail of Figure 2.

### DESCRIPTION OF EMBODIMENTS

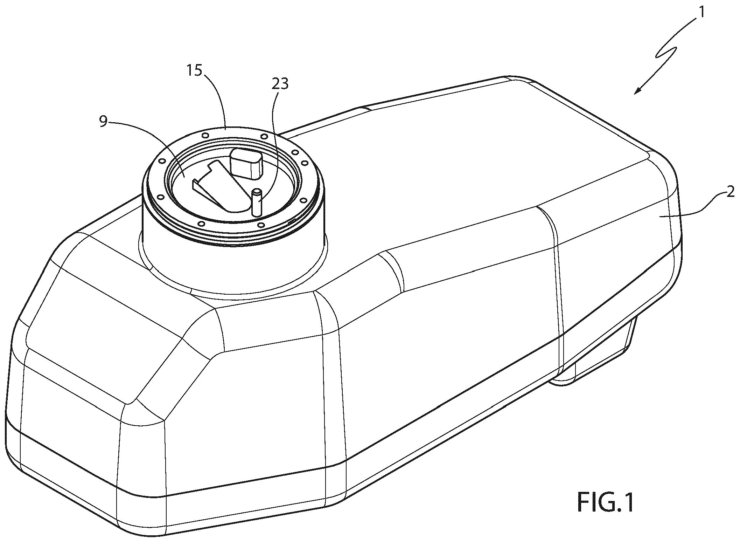

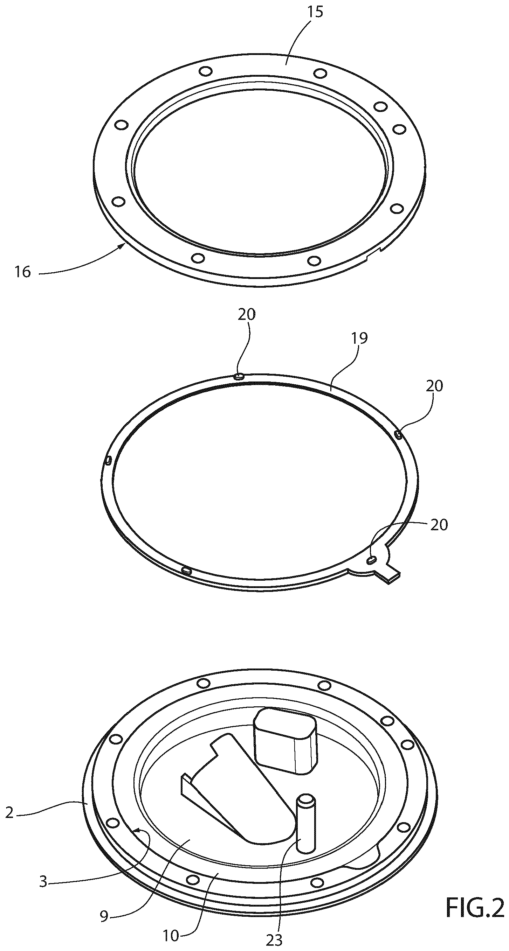

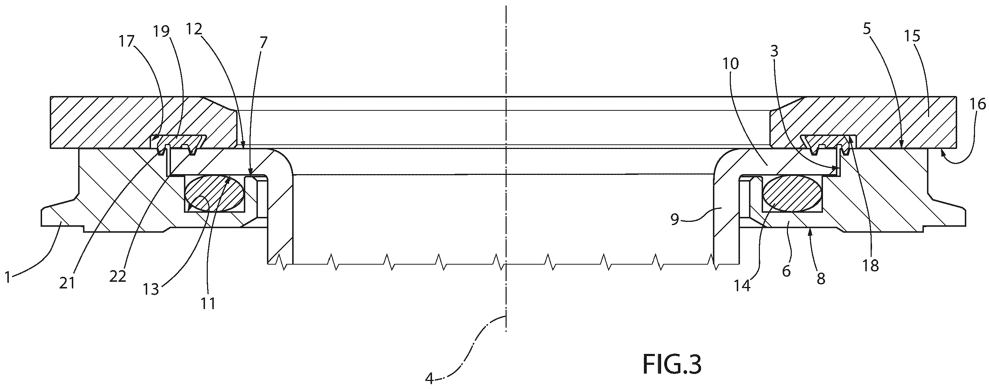

With reference to Figures 1, 2, and 3, reference numeral 1 indicates, as a whole, a fuel tank for vehicles comprising a container 2 for storing fuel provided with an upper opening 3 having, in this case, a circular shape.

The opening 3 has a longitudinal axis 4, is axially limited by a substantially flat upper surface 5 coaxial to the axis 4, and is provided with an inner coupling flange 6 radially protruding inwards from the opening 3.

The flange 6 has an annular, in this case circular, shape and is axially limited by an upper surface 7 and a lower surface 8 substantially parallel to each other and perpendicular to the axis 4.

The opening 3 is closed by a closing plate 9, in this case having a circular shape, which is mounted inside the opening 3 coaxial to the axis 4, and is provided with an outer coupling flange 10 configured to be coupled to the flange 6.

The flange 10 has an annular, in this case circular, shape and is axially limited by a lower surface 11 facing the surface 7 and by an upper surface 12 substantially coplanar to the surface 5 of the opening 3.

The flange 6 is provided with an annular cavity 13, which extends coaxial to the axis 4, opens outwards at the surface 7, and accommodates, on the inside, a ring gasket 14 configured to couple the flanges 6 and 10 to each other in a fluid-tight manner.

The tank 1 further comprises a locking ring 15, which extends coaxial to the axis 4, and is screwed on the surface 5 of the opening 3 for axially locking the flange 10 on the flange 6 with the interposition of the gasket 14.

The ring 15 is axially limited by a lower surface 16 facing both the surface 5 of the opening 3, and the surface 12 of the flange 10, and is provided with an annular cavity 17, which extends coaxial to the axis 4, opens outwards at the surface 16, and is limited by a bottom wall 18 substantially perpendicular to the axis 4.

The cavity 17 accommodates, on the inside, a ring gasket 19 configured to couple the opening 3, the flange 10, and the ring 15 to one another in a fluid-tight manner.

The gasket 19 is provided with a plurality of coupling teeth 20, which are distributed around the axis 4, and are configured to be coupled through interference to corresponding recesses (not illustrated) obtained on the wall 18 so as to hook the gasket 19 to the ring 15.

The gasket 19 is further provided with two annular teeth 21, 22, which are coaxial to each other and to the axis 4, and are configured to be coupled to the surface 5 of the opening 3 and to the surface 12 of the flange 10, respectively, in a fluid-tight manner.

According to a variation not shown, the gasket 19 is overmoulded inside the cavity 17 of the ring 15.

The tank 1 further comprises a known supply pump not shown, which is housed inside the container 2, and is connected to a fitting 23 obtained on the plate 9 by means of a supply duct housed inside the container 2.

The tank 1 has some advantages mainly deriving from the fact that the presence of the gaskets 14 and 19 allows at least limiting the leakage between the opening 3, the closing plate 9, and the locking ring 15 of the vapours generated by the fuel inside the container 2.

## Claims

1. A fuel tank for vehicles comprising a container (2) for storing fuel having an opening (3) provided with an inner coupling flange (6); a pumping device mounted inside the container (2); a closing plate (9) for the container (2) provided with an outer coupling flange (10) configured to be coupled to the inner coupling flange (6); a first ring gasket (14) to couple the inner and outer coupling flanges (6, 10) to each other in a fluid-tight manner; and a locking ring (15) to axially lock the closing plate (9) on the container (2) with the interposition of the first ring gasket (14); and **characterized in that** it further comprises a second ring gasket (19) to couple the opening (3), the closing plate (9) and the locking ring (15) to one another in a fluid-tight manner.

2. The fuel tank according to claim 1, wherein the first ring gasket (14) is mounted between the inner coupling flange (6) and the outer coupling flange (10).

3. The fuel tank according to claim 1 or 2, wherein the second ring gasket (19) is mounted between the opening (3), the outer coupling flange (10) and the locking ring (15) .

4. The fuel tank according to any one of the preceding claims, wherein the inner coupling flange (6) has a first annular seat (13) configured to house, on the inside, the first ring gasket (14).

5. The fuel tank according to any one of the preceding claims, wherein the locking ring (15) has a second annular seat (17) configured to house, on the inside, the second ring gasket (19).

6. The fuel tank according to any one of the preceding claims, wherein the second ring gasket (19) is coupled to the locking ring (15) through interference.

7. The fuel tank according to claim 6, wherein the second ring gasket (19) has a plurality of coupling teeth (20) coupled, through interference, to corresponding recesses obtained on the locking ring (15).

8. The fuel tank according to any one of the claims from 1 to 5, wherein the second ring gasket (19) is overmoulded on the locking ring (15).

9. The fuel tank according to any one of the preceding claims, wherein the second ring gasket (19) is provided with a first annular tooth (21) configured to be coupled to the opening (3) in a fluid-tight manner and with a second annular tooth (22) configured to be coupled to the outer coupling flange (10) in a fluid-tight manner.

10. The fuel tank according to any one of the preceding claims and further comprising a supply duct mounted inside the container (2) so as to connect the pumping device and a fitting (23) obtained on the closing plate (9) to each other.
